# EUROPEAN PATENT SPECIFICATION

(11) **EP 3 181 712 B1**
(45) Date of publication and mention of the grant of the patent: **13.02.2019**
(21) Application number: 15831485.6
(22) Date of filing: 06.08.2015
(51) Int. Cl.: C22C 38/00, C22C 38/02, C22C 38/04, C22C 38/06, C22C 38/14, C22C 38/60, H01F 1/16, C21D 8/12, C21D 6/00

(54) **NON-ORIENTED ELECTRICAL STEEL SHEET HAVING EXCELLENT MAGNETIC PROPERTIES**
UNGERICHTETES ELEKTROSTAHLBLECH MIT HERVORRAGENDEN MAGNETISCHEN EIGENSCHAFTEN
TÔLE D'ACIER ÉLECTRIQUE NON ORIENTÉE PRÉSENTANT D'EXCELLENTES PROPRIÉTÉS MAGNÉTIQUES

(30) Priority: 14.08.2014 JP 2014165125
(43) Date of publication of application: 21.06.2017
(73) Proprietor: JFE Steel Corporation, Tokyo 100-0011 (JP)
(72) Inventor: NAKANISHI, Tadashi, Tokyo 100-0011 (JP); KOSEKI, Shinji, Tokyo 100-0011 (JP); ODA, Yoshihiko, Tokyo 100-0011 (JP); OKUBO, Tomoyuki, Tokyo 100-0011 (JP)
(74) Representative: Hoffmann Eitle
(86) International application number: PCT/JP2015/072306
(87) International publication number: WO 2016/024511

(56) References cited:
- WO-A1-2007/069776
- WO-A1-2012/113184
- WO-A1-2012/113184
- WO-A1-2013/102556
- CN-A- 103 614 615
- CN-B- 102 796 948
- JP-A- H1 088 297
- JP-A- H1 088 297
- JP-A- H11 158 548
- JP-A- 2001 323 347
- JP-A- 2001 323 347
- KR-A- 20110 072 849
- KR-A- 20110 072 849
- KR-A- 20120 074 032
- KR-A- 20120 074 032

## Description

### TECHNICAL FIELD

This invention relates to a non-oriented electrical steel sheet having a high magnetic flux density and excellent magnetic properties which is mainly used as an iron core of a driving motor or a generator motor for hybrid vehicles and electric vehicles.

### RELATED ART

Recently, high-efficiency induction motors are used in view of an increasing demand for energy-saving. In order to improve an efficiency of the high-efficiency induction motor, a laminate thickness in an iron core is increased, or a filling rate of winding wires is increased, or an electrical steel sheet used as the iron core is changed from a conventional low-grade material to a high grade material having a lower iron loss.

A core material used in the induction motor is required to be low in the iron loss and further to have a low effective excitation current at a predetermined magnetic flux density for decreasing a copper loss by lowering the effective excitation current. In order to lower the excitation current, it is effective to increase a magnetic flux density of the core material.

Further, a driving motor or a generator motor used in hybrid vehicles and electric vehicles, which become popular rapidly, is necessary to be installed in a limited space inside the vehicle, and also downsizing thereof is strongly demanded for decreasing the weight of the vehicle. To this end, the downsizing of the driving motor of generator motor is attained by performing the operation of the motor at a variable speed through a frequency control of a driving power source or at a high speed above a commercial frequency. However, even if the motor is downsized, it is required to have a high output, a high torque and a high efficiency at a high frequency for exhibiting a sufficient performance. Accordingly, an electrical steel sheet used as an iron core of such a motor is strongly desired to be high in the magnetic flux density and low in the iron loss.

As an electrical steel sheet having an increased magnetic flux density, for example, Patent Document 1 discloses a non-oriented electrical steel sheet formed by adding 0.1-5 mass% of Co to a steel having not more than 4 mass% of Si. Also, Patent Document 2 proposes a method of attaining a high magnetic flux density by making P content 0.07-0.20 mass% and making Si content 0.17-3.0 mass%, conducting a box annealing at a low cooling rate as a hot band annealing and controlling a texture in a finish annealing. Patent Document 3 proposes a method of attaining a high magnetic flux density by making Al content not more than 0.017 mass%. Further, Patent Document 4 proposes a method of attaining a high magnetic flux density by adding Sb or Sn as an element other than above.

KR 2012 0074032 A discloses a non-oriented electrical steel sheet having high magnetic flux density, low core loss and high permeability of rolling direction and a manufacturing method thereof.

### PRIOR ART DOCUMENTS

### PATENT DOCUMENTS

Patent Document 1: JP-A-2000-129410
Patent Document 2: Japanese Patent No. 3870893
Patent Document 3: Japanese Patent No. 4126479
Patent Document 4: Japanese Patent No. 2500033

### SUMMARY OF THE INVENTION

### TASK TO BE SOLVED BY THE INVENTION

However, when the method disclosed in Patent Document 1 is applied to a conventional motor, there is a problem that since Co is a very expensive element, the production cost is significantly increased. Also, when the method disclosed in Patent Document 2 is applied to an actual production, there is a problem that operation troubles such as fracture and the like are frequently caused in the rolling process or the like to oblige decreases of the productivity and the yield. Further, when the hot band annealing is the box annealing, there is a problem that the production cost is increased as compared to a continuous annealing. Furthermore, in the method disclosed in Patent Document 3, an effect of sufficiently increasing the magnetic flux density cannot be stably obtained by one cold rolling at a room temperature. This problem can be improved to a certain degree by employing two or more cold rollings interposing an intermediate annealing therebetween or a warm rolling at a sheet temperature of about 200°C. However, the two or more cold rollings interposing an intermediate annealing therebetween increase the production cost, while the warm rolling requires support with an equipment or process control therefor, so that there is a problems that restriction and the like are large. Moreover, in the method disclosed in Patent Document 4, it is necessary to conduct a light cold rolling after the hot rolling, so that there is a problem that the production cost is increased.

From such a background, it is desired to develop a non-oriented electrical steel sheet having a high magnetic flux density and a low iron loss without causing a significant increase of the production cost.

The invention is made in view of the above problems of the conventional art, and an object thereof is to provide a non-oriented electrical steel sheet having a high magnetic flux density and a low iron loss stably at a low cost.

### SOLUTION FOR TASK

The inventors have focused on a chemical composition of a raw material and made various studies for solving the above task. As a result, it has been found that a non-oriented electrical steel sheet having a high magnetic flux density and a low iron loss can be stably obtained by adding an appropriate amount of Ti to a steel with reduced Al and added P, and the invention has been accomplished.

The invention is defined in the claims.

### EFFECT OF THE INVENTION

According to the invention, it is possible to provide a non-oriented electrical steel sheet having a high magnetic flux density and excellent iron loss properties stably at a low cost, so that it can be preferably used as a core material for a high-efficiency induction motor, a driving motor for hybrid vehicles and electric vehicles requiring a high torque, a high-efficiency power generator requiring a high generation efficiency and so on.

### BRIEF DESCRIPTION OF THE DRAWINGS

FIG. 1 is a graph showing an influence of P content upon a magnetic flux density B₅₀ after finish annealing.
FIG. 2 is a graph showing an influence of Ti content upon a magnetic flux density B₅₀ after finish annealing.

### EMBODIMENTS FOR CARRYING OUT THE INVENTION

Hereinafter, experiments building a momentum on the development of the invention will be described.

### <Experiment 1>

At first, in order to investigate an influence of P upon magnetic flux density, steels prepared by variously changing an addition amount of P within a range of 0.01-0.16 mass% in an Al-less steel having a chemical composition comprising C: 0.002 mass%, Si: 3.1 mass%, Mn: 0.2 mass%, Al: 0.001 mass%, N: 0.002 mass% and S: 0.002 mass% and an Al-added steel having a chemical composition comprising C: 0.002 mass%, Si: 2.7 mass%, Mn: 0.2 mass%, Al: 0.30 mass% and N: 0.002 mass%, S: 0.002 mass% are melted in a laboratory to form steel ingots, which are heated to a temperature of 1100°C and then hot rolled to form hot rolled sheets of 1.6 mm in thickness. Thereafter, the hot rolled sheets are subjected to a hot band annealing at 980°C for 30 seconds, pickled and cold rolled to form cold rolled sheets having a thickness of 0.20 mm, which are further subjected to a finish annealing at 1000°C for 10 seconds to provide cold-rolled and annealed sheets.

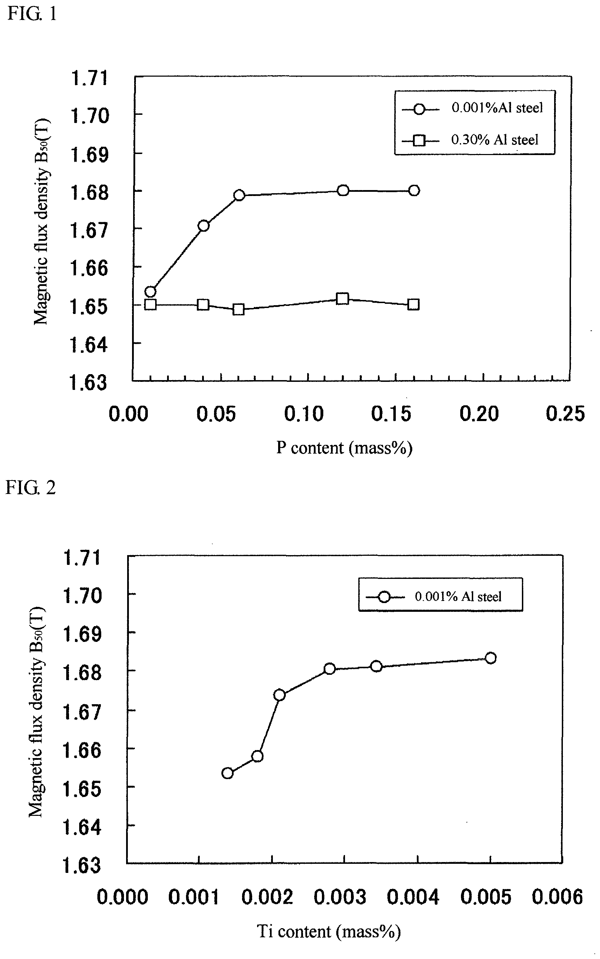

From the thus obtained cold rolled and annealed sheets are cut out test specimens with width: 30 mm x length: 280 mm in the rolling direction as a lengthwise direction (L direction) and in a direction perpendicular to the rolling direction (C direction) to measure their magnetic flux densities B₅₀ by a 25 cm Epstein method described in JIS C2550. The results are shown in FIG. 1 as a relation to P content. As seen from FIG. 1, an increase of the magnetic flux density is not admitted in the Al-added steel even when P content is increased, while the magnetic flux density is increased by increasing P content in the Al-less steel.

The reason why the magnetic flux density is increased by the increase of the P content in the Al-less steel as mentioned above is not yet clear at present, but it is thought that some kind of interaction between Al and P is lost by the absence of Al to promote segregation of P into grain boundaries and also the recrystallization is influenced by the segregation of P to improve the texture.

### <Experiment 2>

Then, in order to investigate the production stability of the steel added with P, an Al-less steel containing C: 0.002 mass%, Si: 3.1 mass%, Mn: 0.2 mass%, P: 0.06 mass%, Al: 0.001 mass%, N: 0.002 mass% and S: 0.002 mass% is tapped at 10 charges and hot rolled to form hot rolled sheets of 1.6 mm in thickness. Next, the hot rolled sheets are subjected to a hot band annealing at 980 °C for 30 seconds, pickled and cold rolled to obtain cold rolled sheets of 0.20 mm in thickness, which are subjected to a finish annealing at 1000°C for 10 seconds to form cold-rolled and annealed sheets.

With respect to the cold rolled and annealed sheets thus obtained is measured the magnetic flux density B₅₀ in the same way as above, and as a result, it is revealed that the measured results are largely varied. When cross sections of the steels having a low magnetic flux density are observed by a scanning type electron microscope (SEM), a large number of fine nitrides are precipitated in the crystal grain boundaries.

From this result, the reason causing the variation of the magnetic flux density is thought due to the fine nitrides. That is, in the ordinary Al-added steel, A1N is coarsely precipitated and stably held at a precipitation state without being entirely solid-soluted even at a high temperature. In the Al-less steel, however, it is thought due to the fact that since Al content is small, fine nitrides (AlN) are increased and hence P is segregated in an interface between fine AlN precipitate and the iron matrix to decrease an effective amount of P to be segregated into the grain boundary, whereby an effect of increasing the magnetic flux density is not obtained sufficiently. It is also thought in the Al-less steel that as the Al content is small, a relatively varying amount of Al content is increased even if the Al content is slightly changed, and also the fine AlN precipitates are dissociated and solid-soluted in the annealing and hence the state of AlN precipitates is also affected by the change in the annealing temperature to cause the variation of the magnetic flux density.

### <Experiment 3>

In order to coarsen the fine nitrides, the inventors have investigated an effect of adding Ti.

Steels having a chemical composition comprising C: 0.001 mass%, Si: 3.2 mass%, Mn: 0.2 mass%, P: 0.06 mass%, Al: 0.001 mass%, N: 0.002 mass% and S: 0.001 mass% and added with Ti varied in a range of 0.0014-0.0050 mass% is melted in a laboratory to form steel ingots, which are heated to 1100°C and thereafter hot rolled to form hot rolled sheets of 1.6 mm in thickness.

Then, the each hot rolled sheet is subjected to a hot band annealing at 1020°C for 30 seconds, pickled and cold rolled to form a cold rolled sheet having a thickness of 0.20 mm, which is further subjected to a final annealing at 1000°C for 10 seconds to provide a cold rolled and annealed sheet.

From the thus obtained cold rolled and annealed sheets are cut out test specimens of width: 30 mm x length: 280 mm in the same way as the above experiment to measure a magnetic flux density B₅₀ by an Epstein method. The results are shown in FIG. 2 as a relation to Ti content. As seen from FIG. 2, the magnetic flux density is increased when the addition amount of Ti exceeds 0.0020 mass%.

The effect of increasing the magnetic properties (magnetic flux density) by adding Ti is thought as follows.

In the Al-added steel, N is bonded with a large amount of Al to mainly precipitate coarse AlN, while Ti is precipitated mainly as fine TiC. From a viewpoint of the magnetic properties, therefore, a smaller Ti content is preferable in the Al-added steel.

On the other hand, in the low-Al steel (Al-less steel), Ti is precipitated as TiN. When Ti content is small, fine TiN is precipitated, while when Ti is added in an amount exceeding the predetermined amount, nitride is mainly precipitated as coarse TiN because Al content is small. Consequently, it is thought that the fine precipitation of AlN into the grain boundary is suppressed to promote the segregation of P into the grain boundary, whereby the magnetic flux density is increased.

The invention is based on the above knowledge.

The reason of limiting the chemical composition in the non-oriented electrical steel sheet according to the invention will be described below.

### C: not more than 0.01 mass%

C is a harmful element deteriorating the iron loss, so that it is preferable to become smaller. When C exceeds 0.01 mass%, the increase of the iron loss becomes remarkable, so that the upper limit of C is set to 0.01 mass%. Preferably, it is not more than 0.005 mass%. Moreover, the lower limit is not particularly limited because a smaller amount of C is more preferable.

### Si: 1.3-3.7 mass%

Si is usually added as a deoxidizing agent for steel. In the electrical steel sheets, however, it is an important element because it has an effect of increasing an electric resistance to reduce an iron loss at a high frequency. In order to obtain such an effect, an addition amount of not less than 1.3 mass% is necessary. When it exceeds 5.0 mass%, cracks are caused during the cold rolling, and hence the productivity as well as the magnetic flux density is decreased. The upper limit thereof is set to 3.7 mass%. Preferably, it is a range of 1.6-3.7 mass%.

### Mn: 0.01-2 mass%

Mn has an effect of improving hot workability of steel and preventing the occurrence of surface defects. Also, it has an effect of increasing the electric resistance to reduce the iron loss, which is not so much as Si or Al. Therefore, Mn is added in an amount of not less than 0.01 mass%. On the other hand, as Mn content becomes larger, the magnetic flux density or saturated magnetic flux density is decreased, so that the upper limit of Mn content is set to 2 mass%. Preferably, it is a range of 0.05-1 mass%.

### Al: not more than 0.004 mass%

Al has an effect of improving the texture of the finish annealed sheet and increasing the magnetic flux density as an amount becomes small. Also, in order to obtain the effect of increasing the magnetic flux density by the addition of P, it is necessary to decrease Al. However, when Al exceeds 0.004 mass%, the effect by the addition of P cannot be obtained. Therefore, the upper limit of Al is 0.004 mass%. Preferably, it is not more than 0.003 mass%. Moreover, the lower limit thereof is not particularly limited because a smaller amount of Al is more preferable.

### N: not more than 0.005 mass%

N forms nitride and deteriorates the magnetic flux density, so that it is limited to not more than 0.005 mass%. Preferably, it is not more than 0.003 mass%. The lower limit is not particularly limited because a smaller amount is more preferable.

### P: 0.05-0.15 mass%

P is one of the important elements in the invention, and has an effect of increasing the magnetic flux density by segregation into the grain boundary in the Al-less steel as show in FIG. 1. Such an effect is obtained by an addition amount of not less than 0.03 mass%. On the other hand, when P exceeds 0.20 mass%, it is difficult to perform the cold rolling. In the invention, therefore, the addition amount of P is a range of 0.05-0.15 mass%.

### S: not more than 0.005 mass%

S is an element forming precipitates or inclusions to deteriorate magnetic properties of a product, so that a smaller amount is more preferable. Therefore, the upper limit of S is set to 0.005 mass% in order not to cause the deterioration of the magnetic properties. Preferably, it is not more than 0.003 mass%. The lower limit is not particularly limited because a smaller amount is more preferable.

### Ti: 0.0030 -0.01 mass%

Ti has an effect of increasing the magnetic flux density by bonding with N to form coarse TiN and suppressing fine precipitation of Al as AlN. When Ti is not more than 0.0020 mass%, the above effect cannot be obtained, while when it exceeds 0.1 mass%, surface defects such as scab are caused to decrease the productivity and yield. Therefore, Ti is set to a range of 0.0030-0.01 mass%.

The non-oriented electrical steel sheet according to the invention may contain one or more of Sn, Sb, Ca and Mg in the following range in addition to the above essential ingredients.

### Sn: 0.001-0.1 mass%

Sn is an element segregating into the grain boundary but is small in the influence on P segregation and rather has an effect of promoting the formation of deformation band in grains to increase the magnetic flux density. The above effect is obtained in an addition amount of not less than 0.001 mass%. On the other hand, when it exceeds 0.1 mass%, steel is embrittled to increase sheet breakage or surface defects such as scabs and the like in the production process. Therefore, the addition amount of Sn is to be in a range of 0.001-0.1 mass%. More preferably, it is a range of 0.01-0.05 mass%.

### Sb: 0.001-0.1 mass%

Sb is an element which is segregating into the grain boundary like Sn but is small in the influence on P segregation and rather has an effect of suppressing nitriding in the annealing to improve the magnetic properties. The above effect is obtained in an addition amount of not less than 0.001 mass%. On the other hand, when it exceeds 0.1 mass%, steel is embrittled to increase sheet breakage or surface defects such as scabs and the like in the production process. Therefore, the addition amount of Sb is to be in a range of 0.001-0.1 mass%. More preferably, it is in a range of 0.01-0.05 mass%.

### Ca: 0.001-0.02 mass%,

Ca has an effect of coarsening sulfide to decrease the iron loss, and can be added in an amount of not less than 0.001mass%. While, when it is added excessively, the effect is saturated to cause disadvantage economically, so that the upper limit thereof is set to 0.02 mass%. More preferably, it is a range of 0.002-0.01 mass%.

### Mg: 0.001-0.02 mass%

Mg has an effect of coarsening sulfide to decrease the iron loss like Ca, and can be added in an amount of not less than 0.001 mass%. While, when it is added excessively, the effect is saturated to cause disadvantage economically, so that the upper limit thereof is set to 0.02 mass%. More preferably, it is in a range of 0.002-0.01 mass%.

The remainder other than the above ingredients in the non-oriented electrical steel sheet according to the invention is Fe and inevitable impurities.

The production method of the non-oriented electrical steel sheet according to the invention will be described below.

The method for producing the non-oriented electrical steel sheet according to the invention is not particularly limited, and the conventionally well-known production method for the non-oriented electrical steel sheet can be employed as long as a slab containing Al, P and Ti in the aforementioned proper ranges is used as a raw material. For example, there can be adopted a method wherein a steel adjusted to the predetermined chemical composition is melted in a refining process such as converter, electric furnace or the like, subjected to a secondary refining in a degassing apparatus or the like, continuously casting to form a steel slab, which is hot rolled, subjected to a hot band annealing as required, pickled, cold rolled, finish-annealed and thereafter coated and baked with an insulation coating.

The sheet thickness of the steel sheet after the hot rolling (hot rolled sheet) is preferable to be in a range of 1.4-2.8 mm. When it is less than 1.4 mm, troubles in the hot rolling are increased, while when it exceeds 2.8 mm, the cold-rolling reduction becomes too high to deteriorate the texture.

In the case of conducting the hot band annealing, a soaking temperature is preferable to be in a range of 900-1200°C. When it is lower than 900°C, the effect by the hot band annealing cannot be obtained sufficiently, while when it exceeds 1200°C, it becomes disadvantageous costly and surface defects resulting from scales are caused.

Also, the cold rolling of the hot rolled sheet to a final thickness is preferable to be conducted once or twice or more interposing an intermediate annealing therebetween. In particular, since a warm rolling wherein a steel sheet is rolled at a sheet temperature of approximately 200°C has a large effect of increasing the magnetic flux density, it is preferable that the final cold rolling is a warm rolling as long as there is no problem in equipment, production constraint or cost.

The sheet thickness of the cold rolled sheet (final thickness) is preferable to be in the range of 0.1-0.3 mm. It is because when it is less than 0.1 mm, the productivity is decreased, while when it exceeds 0.3 mm, the effect of decreasing the iron loss is small.

The finish annealing subjected to the cold rolled sheet with the final thickness is preferable to be performed by soaking at a temperature of 900-1150°C for 5-60 seconds in a continuous annealing furnace. When the soaking temperature is lower than 900°C, the recrystallization is not promoted sufficiently and good magnetic properties are not obtained and further the effect of correcting the sheet form in the continuous annealing cannot be obtained. While when it exceeds 1150°C, crystal grains are coarsened and the iron loss at a high frequency zone is particularly increased.

Moreover, it is preferable to adopt a continuous annealing as the finish annealing because a box annealing is disadvantageous in the productivity and cost.

The steel sheet after the finish annealing is preferable to be coated on its surface with an insulation coating for reducing the iron loss. The insulation coating is desirable to be an organic coating containing resin in order to ensure a good punchability, while it is desirable to use a semi-organic or inorganic coating when weldability is though as important.

The non-oriented electrical steel sheet produced as above may be used without being subjected to a stress relief annealing, or may be used after the stress relief annealing. Also, the stress relief annealing may be performed after the shaping through a punching process. Here, the stress relief annealing is usually performed under condition of about 750°C for 2 hours.

### EXAMPLE

A steel having a chemical composition shown in Table 1 is melted and continuously casted to form a steel slab. The slab is reheated to a temperature of 1020-1120°C and hot rolled to form a hot rolled sheet having a sheet thickness of 1.6 mm, which is subjected to a hot band annealing at a soaking temperature of 1000°C for a soaking time of 30 seconds by a continuous annealing and cold rolled to form a cold rolled sheet having a sheet thickness of 0.20 mm. Next, the cold rolled sheet is subjected to a finish annealing at a soaking temperature of 1000°C for a soaking time of 10 seconds and coated with an insulation coating to form a product coil of the non-oriented electrical steel sheet.

From the thus obtained product coil of the non-oriented electrical steel sheet are cut out test specimens with a width: 30 mm x a length: 280 mm in the rolling direction (L-direction) as a lengthwise direction and in a direction perpendicular to the rolling direction (C-direction), respectively, to measure a magnetic flux density B₅₀(T) at a magnetizing force 5000 A/m and an iron loss W_{10/400} (W/kg) excited at a magnetic flux density of 1.0 T and a frequency of 400 Hz by a 25-cm Epstein method described in JIS C2550. The results measured on the magnetic properties are also shown in Examples No 2, 9 and 10 are Reference Examples.

**Table 1-1**

| Nº | Chemical composition (mass%) | | | | | | | | | | | | Magnetic properties | | Remarks |
|---|---|---|---|---|---|---|---|---|---|---|---|---|---|---|---|
| | C | Si | Mn | P | S | Sol. Al | N | Ti | Sn | Sb | Ca | Mg | Iron loss W_{10/400} (W/kg) | Magnetic flux density B₅₀ (T) | |
| 1 | 0.0018 | 3.09 | 0.09 | 0.010 | 0.0009 | 0.0005 | 0.0015 | 0.0028 | 0.002 | tr. | tr. | tr. | 12.1 | 1.64 | Comparative Example |
| 2 | 0.0019 | 3.09 | 0.10 | 0.034 | 0.0007 | 0.0003 | 0.0016 | 0.0029 | 0.003 | tr. | tr. | tr. | 11.7 | 1.67 | Example |
| 3 | 0.0018 | 3.12 | 0.08 | 0.06 | 0.0005 | 0.0008 | 0.0019 | 0.0032 | 0.002 | tr. | tr. | tr. | 11.8 | 1.68 | Invention Example |
| 4 | 0.0018 | 3.13 | 0.11 | 0.06 | 0.0013 | 0.0005 | 0.0019 | 0.0041 | 0.002 | tr. | tr. | tr. | 11.8 | 1.68 | Invention Example |
| 5 | 0.0017 | 3.10 | 0.06 | 0.06 | 0.0012 | 0.0001 | 0.0018 | 0.0035 | 0.003 | tr. | tr. | tr. | 11.7 | 1.68 | Invention Example |
| 6 | 0.0019 | 3.09 | 0.09 | 0.10 | 0.0010 | 0.0012 | 0.0020 | 0.0037 | 0.002 | tr. | tr. | tr. | 11.8 | 1.69 | Invention Example |
| 7 | 0.0017 | 2.81 | 0.15 | 0.06 | 0.0009 | 0.0052 | 0.0021 | 0.0035 | 0.002 | tr. | tr. | tr. | 12.5 | 1.64 | Comparative Example |
| 8 | 0.0018 | 2.83 | 0.13 | 0.06 | 0.0004 | 0.30 | 0.0019 | 0.0033 | 0.002 | tr. | tr. | tr. | 11.8 | 1.65 | Comparative Example |
| 9 | 0.0021 | 3.01 | 0.12 | 0.06 | 0.0005 | 0.0008 | 0.0022 | 0.0028 | 0.002 | tr. | tr. | tr. | 11.7 | 1.69 | Example |
| 10 | 0.0022 | 2.99 | 0.19 | 0.06 | 0.0008 | 0.0003 | 0.0021 | 0.0024 | 0.003 | tr. | tr. | tr. | 11.9 | 1.68 | Example |
| 11 | 0.0014 | 2.97 | 0.22 | 0.06 | 0.0010 | 0.0001 | 0.0022 | 0.0019 | 0.002 | tr. | tr. | tr. | 12.3 | 1.66 | Comparative Example |
| 12 | 0.0017 | 3.03 | 0.20 | 0.06 | 0.0009 | 0.0002 | 0.0025 | 0.0013 | 0.002 | tr. | tr. | tr. | 12.4 | 1.65 | Comparative Example |
| 13 | 0.0021 | 2.78 | 0.20 | 0.06 | 0.0012 | 0.31 | 0.0017 | 0.0034 | 0.002 | tr. | tr. | tr. | 11.9 | 1.64 | Comparative Example |
| 14 | 0.0017 | 3.00 | 0.19 | 0.06 | 0.0008 | 0.0014 | 0.0015 | 0.0034 | 0.003 | 0.002 | tr. | tr. | 11.7 | 1.68 | Invention Example |
| 15 | 0.0018 | 3.05 | 0.22 | 0.06 | 0.0007 | 0.0010 | 0.0021 | 0.0042 | 0.003 | 0.032 | tr. | tr. | 11.5 | 1.69 | Invention Example |
| 16 | 0.0020 | 3.02 | 0.18 | 0.06 | 0.0011 | 0.0003 | 0.0023 | 0.0031 | 0.002 | tr. | tr. | tr. | 11.7 | 1.68 | Invention Example |

**Table 1-2**

| Nº | Chemical composition (mass%) | | | | | | | | | | | | Magnetic properties | | Remarks |
|---|---|---|---|---|---|---|---|---|---|---|---|---|---|---|---|
| | C | Si | Mn | P | S | Sol. Al | N | Ti | Sn | Sb | Ca | Mg | Iron loss W_{10/400} (W/kg) | Magnetic flux density B₅₀ (T) | |
| 17 | 0.0018 | 3.03 | 0.19 | 0.06 | 0.0012 | 0.0008 | 0.0014 | 0.0035 | 0.012 | tr. | tr. | tr. | 11.6 | 1.69 | Invention Example |
| 18 | 0.0015 | 2.98 | 0.20 | 0.06 | 0.0009 | 0.0009 | 0.0028 | 0.0035 | 0.049 | tr. | tr. | tr. | 11.5 | 1.69 | Invention Example |
| 19 | 0.0021 | 3.00 | 0.19 | 0.06 | 0.0021 | 0.0005 | 0.0022 | 0.0030 | tr. | tr. | tr. | tr. | 11.9 | 1.67 | Invention Example |
| 20 | 0.0023 | 3.01 | 0.21 | 0.06 | 0.0025 | 0.0011 | 0.0017 | 0.0036 | tr. | tr. | 0.0028 | tr. | 11.7 | 1.68 | Invention Example |
| 21 | 0.0018 | 2.99 | 0.21 | 0.06 | 0.0023 | 0.0007 | 0.0016 | 0.0032 | tr. | tr. | tr. | 0.0020 | 11.7 | 1.68 | Invention Example |
| 22 | 0.0155 | 3.04 | 0.18 | 0.06 | 0.0008 | 0.0004 | 0.0017 | 0.0038 | 0.003 | tr. | tr. | tr. | 12.9 | 1.64 | Comparative Example |
| 23 | 0.0018 | 1.13 | 0.22 | 0.06 | 0.0015 | 0.0013 | 0.0015 | 0.0030 | 0.004 | tr. | tr. | tr. | 14.9 | 1.74 | Comparative Example |
| 24 | 0.0021 | 1.36 | 0.18 | 0.06 | 0.0018 | 0.0013 | 0.0009 | 0.0044 | 0.002 | tr. | tr. | tr. | 13.6 | 1.72 | Invention Example |
| 25 | 0.0025 | 1.99 | 0.21 | 0.06 | 0.0011 | 0.0007 | 0.0022 | 0.0032 | 0.005 | tr. | tr. | tr. | 12.6 | 1.71 | Invention Example |
| 26 | 0.0017 | 5.11 | 0.20 | 0.06 | 0.0008 | 0.0003 | 0.0011 | 0.0033 | 0.003 | tr. | tr. | tr. | 10.7 | 1.64 | Comparative Example |
| 27 | 0.0026 | 3.01 | 1.23 | 0.06 | 0.0006 | 0.0006 | 0.0030 | 0.0038 | 0.002 | tr. | tr. | tr. | 11.3 | 1.68 | Invention Example |
| 28 | 0.0019 | 3.03 | 1.61 | 0.06 | 0.0012 | 0.0005 | 0.0020 | 0.0045 | 0.002 | tr. | tr. | tr. | 10.7 | 1.67 | Invention Example |
| 29 | 0.0018 | 2.97 | 3.61 | 0.06 | 0.0008 | 0.0003 | 0.0021 | 0.0031 | 0.002 | tr. | tr. | tr. | 11.3 | 1.64 | Comparative Example |
| 30 | 0.0021 | 3.01 | 0.20 | 0.06 | 0.0022 | 0.0011 | 0.0065 | 0.0030 | 0.003 | tr. | tr. | tr. | 13.0 | 1.64 | Comparative Example |
| 31 | 0.0014 | 3.03 | 0.19 | 0.06 | 0.0089 | 0.0012 | 0.0022 | 0.0039 | 0.002 | tr. | tr. | tr. | 13.3 | 1.64 | Comparative Example |

As seen from Table 1, the non-oriented electrical steel sheets of Invention Examples obtained by controlling Al, P and Ti of steel ingredients to ranges adapted to the invention have a high magnetic flux density and an excellent iron loss property as compared to the steel sheets of Comparative Examples having the ingredients outside of the above ranges.

## Claims

1. A non-oriented electrical steel sheet having a chemical composition comprising C: not more than 0.01 mass%, Si: 1.3-3.7mass%, Mn: 0.01-2 mass%, sol. Al: not more than 0.004 mass%, P: 0.05-0.15 mass%, S: not more than 0.005 mass%, N: not more than 0.005 mass%, Ti: 0.0030-0.01 mass%, optionally one or two of Sn: 0.001-0.1 mass% and Sb: 0.001-0.1 mass%, optionally one or two of Ca: 0.001-0.02 mass% and Mg: 0.001-0.02 mass%, and the remainder being Fe and inevitable impurities,
wherein the sheet thickness is 0.1-0.3 mm.

2. The non-oriented electrical steel sheet according to claim 1, which contains one or two of Sn: 0.001-0.1 mass% and Sb: 0.001-0.1 mass%.

3. The non-oriented electrical steel sheet according to claim 1 or 2, which contains one or two of Ca: 0.001-0.02 mass% and Mg: 0.001-0.02 mass%.

## Patentansprüche

1. Nichtorientiertes Elektrostahlblech umfassend eine chemische Zusammensetzung, die C: nicht mehr als 0,01 Massen%, Si: 1,3-3,7 Massen%, Mn: 0,01-2 Massen%, sol. Al: nicht mehr als 0,004 Massen%, P: 0,05-0,15 Massen%, S: nicht mehr als 0,005 Massen%, N: nicht mehr als 0,005 Massen%, Ti: 0,0030-0,01 Massen%, optional eines oder zwei aus Sn: 0,001-0,1 Massen% und Sb: 0,001-0,1 Massen%, optional eines oder zwei aus Ca: 0,001-0,02 Massen% und Mg: 0,001-0,02 Massen%, aufweist, wobei der Rest aus Fe und unvermeidbaren Verunreinigungen besteht,
wobei die Blechdicke 0,1-0,3 mm beträgt.

2. Nichtorientiertes Elektrostahlblech gemäß Anspruch 1, das eines oder zwei aus Sn: 0,001-0,1 Massen% und Sb: 0,001-0,1 Massen% enthält.

3. Nichtorientiertes Elektrostahlblech gemäß Anspruch 1 oder 2, das eines oder zwei aus Ca: 0,001-0,02 Massen% und Mg: 0,001-0,02 Massen% enthält.

## Revendications

1. Tôle magnétique en acier non orientée ayant une composition chimique comprenant C : pas plus de 0,01 % en masse, Si : 1,3 à 3,7 % en masse, Mn : 0,01 à 2 % en masse, Al sol. : pas plus de 0,004 % en masse, P : 0,05 à 0,15 % en masse, S : pas plus de 0,005 % en masse, N : pas plus de 0,005 % en masse, Ti : 0,0030 à 0,01 % en masse, facultativement un ou deux parmi Sn : 0,001 à 0,1 % en masse et Sb : 0,001 à 0,1 % en masse, facultativement un ou deux parmi Ca : 0,001 à 0,02 % en masse et Mg : 0,001 à 0,02 % en masse, et le reste étant Fe et les impuretés inévitables,
dans laquelle l'épaisseur de la tôle est de 0,1 à 0,3 mm.

2. Tôle magnétique en acier non orientée selon la revendication 1, qui contient un ou deux parmi Sn : 0,001 à 0,1 % en masse et Sb : 0,001 à 0,1 % en masse.

3. Tôle magnétique en acier non orientée selon la revendication 1 ou 2, qui contient un ou deux parmi Ca : 0,001 à 0,02 % en masse et Mg : 0,001 à 0,02 % en masse.
